Europäisches Patentamt

European Patent Office

Office européen des brevets

(11) Publication number: **0 254 075 B1**

# EUROPEAN PATENT SPECIFICATION

(45) Date of publication of patent specification: **27.02.91**   (51) Int. Cl.⁵: **C01B 25/36**

(21) Application number: **87109267.2**

(22) Date of filing: **27.06.87**

(54) **Crystalline aluminophosphate of the molecular-sieve type, and method for its preparation.**

(30) Priority: **30.06.86 US 880059**

(43) Date of publication of application:
**27.01.88 Bulletin 88/04**

(45) Publication of the grant of the patent:
**27.02.91 Bulletin 91/09**

(84) Designated Contracting States:
**AT BE CH DE ES FR GB GR IT LI LU NL SE**

(56) References cited:
**EP-A- 0 043 562**

(73) Proprietor: **UNION CARBIDE CORPORATION**
**39 Old Ridgebury Road**
**Danbury Connecticut 06817(US)**

(72) Inventor: **Lesch, David Allen**
**15 Clinton Avenue**
**Ossining New York 10562(US)**
Inventor: **Wilson, Stephen Thomas**
**1024 East MAin Street**
**Shrub Oak New York 10588(US)**

(74) Representative: **Eggert, Hans-Gunther, Dr.**
**Räderscheidtstrasse 1**
**D-5000 Köln 41(DE)**

## Description

FIELD OF THE INVENTION

The present invention relates in general to crystalline aluminophosphate compositions, and more particularly to a novel crystalline aluminophosphate of the molecular sieve type, and to the methods for its preparation.

BACKGROUND OF THE INVENTION

Microporous crystalline aluminophosphate compositions having open framework structures formed of $AlO_2$ and $PO_2$ tetrahedral units joined by the sharing of the corner oxygen atoms and characterized by having pore openings of uniform dimensions having heretofore been disclosed in a number of publications, notably the specification of U.S.P. 4,310,440 issued July 7, 1980 to S.T. Wilson et al. The Wilson et al. aluminophosphates constitute a generic class of non-zeolitic molecular sieve materials which are capable of undergoung complete and reversible dehydration while retaining the same essential framework topology in both the anhydrous and hydrated state. By the term "essential framework topology" or "essential framework structure" as used in the aforesaid patent, and also in the present specification and claims, is meant the spatial arrangement of the primary Al-O and P-O bond linkages. Other microporous aluminophosphates which undergo structure rearrangements, either reversibly or irreversibly, upon partial or complete dehydration are also known, for example the minerals variscite and metavariscite and certain of the synthetic metastable aluminophosphates reported by F. D-Yvoire [Bull. Soc. Chim. France, 1762 (1961)]. Other classes of synthetic crystalline compositions which contain framework tetrahedral oxides of iron, manganese, magnesium, cobalt, zinc or silicon in addition to the $AlO_2$ and $PO_2$ tetrahedra are disclosed in U.S.P. 4,567,029; U.S.P. 4,554,143; and U.S.P. 4,440,871.

SUMMARY OF THE INVENTION

The present invention comprises a novel microporous crystalline aluminophosphate, denominated $AlPO_4$-41 and the methods for its preparation. AlPO-41 has an essential framework structure whose chemical composition, expressed in terms of mole ratios of oxides, is:
$Al_2O_3 : 1.0 \pm 0.2 \ P_2O_5$
and exhibits an X-ray powder diffraction pattern which contains at least the d-spacings represented by the values 2 theta in Table 1 set forth hereinafter.

$AlPO_4$-41 can be prepared by hydrothermal crystallization from a reaction mixture containing in addition to water, a reactive source of aluminum and phosphorus and an organic templating agent which is preferably an alkylamine, and most preferably di-n-propylamine. Seeding of the reaction mixture with crystals of previously prepared $AlPO_4$-41 or of a topologically related crystal has been found to be advantageous in avoiding the simultaneous production of undue amounts of other aluminophosphate materials.

DETAILED DESCRIPTION OF THE INVENTION

The novel microporous aluminophosphate of the present invention can be produced by hydrothermal crystallization from a reaction mixture containing reactive sources of phosphorus and aluminum and an organic templating agent, preferably an alkylamine such as di-n-propylamine or di-iso-propylamine or mixture thereof. The preparative process typically comprises forming a reaction mixture which in terms of molar ratios of oxides is
$Al_2O_3 : 0.5 \text{ to } 3 \ P_2O_5 : 10\text{-}200 \ H_2O$
and contains at least about 1.0 to 6 moles, preferably 1 to 4 moles, of dialkylamine per mole of $Al_2O_3$. The reaction mixture is placed in a reaction vessel inert toward the reaction mixture and heated at a temperature of at least about 100°C., preferably between 100°C. and 300°C., until crystallized, usually a period of from 1 to 4 weeks. The solid crystalline reaction product is then recovered by any convenient method, such as filtration or centrifugation washed with water and dried in air at a temperature between ambient and about 110°C. In a preferred crystallization method, the source of phosphorus is phosphoric acid, and the source

2

of aluminum is a pseudo-beohmite hydrated aluminum oxide, the temperature is 150°C. to 200°C., the crystallization time is from 7 hours to 14 days, and the ratio of organic oxides in the reaction mixture is

$Al_2O_3$ : 1.0-2.0 $P_2O_5$ : 40-100 $H_2O$

The most preferred templating agent is di-n-propylamine and is present in the reaction mixture in an amount of from about 2.0 to 4.0 moles per mole of alumina. Also it is most preferred that the reaction mixture contain at least 50 moles of $H_2O$ per mole of alumina and contain seed crystals of previously prepared $AlPO_4$-41. The amount of seed crystals is not critical, but amounts of up to 5 weight % $AlPO_4$-41 seeds based on the overall weight of the reaction mixture have been found to be effective. Digestion and crystallization can be either quiescent or stirred.

It is to be noted that di-n-propylamine has heretofore been employed as the templating agent in the hydrothermal synthesis of other micorporous crystalline aluminophosphates, namely $AlPO_4$-31 and $AlPO_4$-39. The synthesis of $AlPO_4$-31 is reported in U.S.P. 4,385,994 issued May 31, 1983. In that synthesis, however, the di-n-propylamine was present in relatively low concentrations in the reaction mixture, i.e., 1 mole per mole of alumina. We have discovered, however, that $AlPO_4$-41 can be present as a minor impurity in reaction products obtained for the production of $AlPO_4$-31. This phenomenon is illustrated hereinafter in the Examples. The preparation of $AlPO_4$-39 is disclosed in copending EP-A-226,989 filed December 13, 1986. In the hydrothermal synthesis of $AlPO_4$-39, the relatively high concentration of the basic amine is in part countered by the addition of an organic or mineral and such as acetic acid or hydrochloric acid.

It is further noted that, based on the similarity of X-ray powder diffraction patterns, it is possible that the structure of $AlPO_4$-41 is topologically related to the structure of the silicoaluminophosphate denominated as SAPO-41, the latter composition being characterized and the method for its preparation being set forth in U.S.P. 4,440,871. With respect to SAPOÐ-41, however, the organic templating agent employed was tetra-n-butylammonium hydroxide.

The template-containing as-synthesized form of $AlPO_4$-41 of the present invention has an essential framework structure whose chemical composition expressed in terms of mole ratios of oxides is:

$Al_2O_3$ : 1.0 ± 0.2 $P_2O_5$

and has a characteristic X-ray powder diffraction pattern which contains at least the d-spacings represented by the values of 2 theta set forth in Table 1 below:

## TABLE I

| $2\theta$ | Relative Intensity |
|---|---|
| 6.8 - 6.95 | M |
| 9.7 - 9.8 | W-M |
| 13.75-13.85 | M |
| 21.1 -21.2 | M-S |
| 22.25-22.35 | VS |
| 22.95-23.05 | M |
| 25.95-26.05 | M |
| 29.50-29.60 | W-M |

All of the as-synthesized forms of $AlPO_4$-41 for which X-ray powder diffraction data have been obtained to date have patterns within the generalized pattern of Table II below:

## TABLE II

| 2θ | 100 x (I/Iₒ) Intensity |
|---|---|
| 6.8 - 6.95 | 40-63 |
| 9.7 - 9.8 | 29-38 |
| 13.75-13.85 | 32-44 |
| 18.25-18.35 | 19-25 |
| 20.75-20.85 | 11-14 |
| 21.1 -21.2 | 53-82 |
| 22.25-22.35 | 100 |
| 22.95-23.05 | 47-60 |
| 23.3 -23.4 | 25-29 |
| 25.3 -25.4 | 17-20 |
| 25.95-26.05 | 37-47 |
| 27.8 -27.9 | 7-10 |
| 28.05-28.25 | 4- 6 |
| 28.3 -28.4 | 4- 6 |
| 29.5 -29.6 | 24-32 |
| 29.8 -29.9 | 7-10 |
| 31.4 -31.5 | 7- 9 |
| 33.5 -33.6 | 4- 6 |
| 33.7 -33.8 | 5- 6 |
| 35.0 -35.05 | 4- 6 |
| 36.6 -36.7 | 4- 5 |
| 37.1 -37.15 | 5- 8 |
| 37.75-37.85 | 10-13 |
| 38.4 -38.5 | 4- 6 |
| 43.05-43.15 | 4- 6 |
| 47.75-47.85 | 4- 6 |

When the as-synthesized AlPO₄-41 compositions are calcined, i.e., heated at a temperature sufficiently high, typically between about 300°C. and about 700°C., or otherwise treated, such as by chemical oxidation, to remove essentially all of the organic templating agent present in the intracrystalline pore system, the composition has an X-ray powder diffraction pattern which contains at least the d-spacings represented by the values of 2 theta set forth in Table A below:

## TABLE A

| $2\theta$ | Relative Intensity |
|---|---|
| 9.40- 9.55 | W-M |
| 10.45-10.5 | M |
| 13.6 -13.7 | M |
| 21.6 -21.7 | VS |
| 23.15-23.3 | W-M |
| 25.6 -25.7 | W-M |

All of the calcined template-free forms of $AlPO_4$-41 for which X-ray powder diffraction data have been obtained to date have patterns within the generalized pattern of Table B below:

## TABLE B

| 2θ | Intensity 100 x (I/Io) |
|---|---|
| 6.75- 6.85 | 11-13 |
| 9.40- 9.55 | 23-35 |
| 10.45-10.50 | 29-48 |
| 13.6 -13.7 | 29-41 |
| 14.95-15.05 | 11-16 |
| 18.8 -18.9 | 11-19 |
| 20.45-20.55 | 19-27 |
| 21.05-21.2 | 14-23 |
| 21.6 -21.7 | 100 |
| 22.7 -22.8 | 6- 7 |
| 23.15-23.3 | 24-36 |
| 23.65-23.75 | 13-23 |
| 24.05-24.15 | 8-12 |
| 24.35-24.45 | 4- 7 |
| 25.0 -25.1 | 13-25 |
| 25.6 -25.7 | 20-31 |
| 27.2 -27.35 | 6-12 |
| 28.8 -28.95 | 8-12 |
| 30.15-30.25 | 9-15 |
| 30.85-30.95 | 18-29 |
| 32.8 -32.9 | 4- 7 |
| 36.2 -36.3 | 5- 9 |
| 37.65-37.8 | 6- 9 |
| 38.05-38.2 | 3- 6 |
| 44.05-44.15 | 5- 6 |
| 49.25-49.35 | 4- 7 |

The above X-ray patterns and all other X-ray patterns appearing hereinafter were obtained by use of either a standard X-ray powder diffraction technique or by use of computer based techniques using a Siemens D-500 X-ray powder diffractomer, available from Siemens Corporation, Cherry Hill, New Jersey. When the standard X-ray technique is employed, radiation source is a high-intensity, copper target, X-ray tube operated at 50 Kv and 49 ma. The diffraction pattern from the copper K-alpha radiation and graphite monochromator were recorded by an X-ray spectrometer scintillation counter, pulse height analyzer and strip chart recorder. Flat compressed powder samples are scanned at 2 degrees (2 theta) per minute, using a two second time constant. Interplanar spacings (d) in Angstrom units can be readily obtained from the position of the diffraction peaks expressed as $2\phi$ (theta) as observed on the strip chart where theta is the Bragg angle. Intensities were determined from the heights of diffraction peaks after subtracting background, "$I_o$" being the intensity of the strongest line or peak, and "I" being the intensity of each of the other peaks.

As will be understood by those skilled in the art, the determination of the parameter 2 theta, irrespective of the technique employed, is subject to both human and mechanical error, which in combination, can impose an uncertainty of about 0.4° on each reported value of 2 theta. This uncertainty is of course, also manifested in the reported value of the d-spacings, which are calculated from the 2 theta values. This imprecision is general throughout the art and is not sufficient to preclude the differentiation of the present crystalline materials from the compositions of the prior art. In some of the X-ray patterns reported, the relative intensities at the 2 theta values reported are indicated by the notations VS, S, M, and W which represent Very Strong, Strong, Medium and Weak respectively.

It is further to be noted that the ranges for the values of $2\theta$ and the intensity values are those actually observed. It is to be expected, therefore, that in a particular preparation of $AlPO_4$-41 some instances will occur in which a d-spacing or intensity value is slightly outside the aforesaid ranges.

$AlPO_4$-41 exhibits surface characteristics which make it useful as a catalyst or catalyst support in various hydrocarbon conversion and oxidative combustion processes. $AlPO_4$-41 can be associated with catalytically active metals, e.g., by framework substitution, by impregnation, doping and the like, by methods traditionally used in the art for the fabrication of catalyst compositions.

Further, $AlPO_4$-41 has a pore size of about 6.2 Angstroms which makes it suitable for use as a molecular sieve for the separation of molecular species.

The following examples are provided to illustrate the invention and are not to be construed as limiting thereof:

## EXAMPLE I

$AlPO_4$-41 was prepared by combining 27.5 grams of a hydrated aluminum oxide, a pseudo-boehmite phase comprising 74.2 weight percent $Al_2O_3$ and 25.8 weight percent $H_2O$, with a solution of 46.0 grams of 85 wt. % ortho-phosphoric acid ($H_3PO_4$) and 119.2 grams of $H_2O$. The resulting mixture was stirred until a homogeneous mixture was observed. To the above mixture 20.3 grams di-n-propylamine ($nPr_2NH$) was added and the resultant mixture was once again mixed until homogeneous. The composition of reaction mixture in molar oxide ratios was:

$$n\text{-}Pr_2NH : Al_2O_3 : P_2O_5 : 40\ H_2O$$

A portion of the reaction mixture (49.2g) was sealed in a stainless steel pressure vessel lined with polytetrafluoroethylene and heated in an oven at 150° C. at the autogenous pressure for 336 hours. The solid reaction product was recovered by filtration, washed with water and dried in air at ambient temperature.

The solid reaction product had an X-ray powder diffraction pattern characterized by the following data:

## TABLE III

| 2θ | | 100x(I/Io) | 2θ | | 100x(I/Io) |
|---|---|---|---|---|---|
| 6.9 | | 24 | 26.8 | * | 5 |
| 8.1 | * | 11 | 27.9 | | 8 |
| 9.4 | * | 22 | 28.4 | * | 7 |
| 9.7 | | 18 | 28.8 | * | 7 |
| 13.2 | | 9 | 29.6 | * | 22 |
| 13.8 | | 22 | 29.8 | | 18 (sh) |
| 15.7 | * | 10 | 31.5 | * | 20 |
| 18.3 | | 14 | 32.9 | * | 6 |
| 20.6 | * | 22 (sh) | 33.5 | | 5 |
| 21.2 | * | 100 | 33.8 | | 5 |
| 22.4 | * | 96 | 34.2 | * | 5 |
| 22.7 | * | 36 (sh) | 35.0 | | 5 |
| 23.1 | | 53 | 36.6 | * | 5 |
| 23.3 | * | 40 (sh) | 37.0 | | 5 |
| 24.8 | * | 5 | 37.7 | * | 18 |
| 25.4 | | 18 | 38.4 | | 6 |
| 26.1 | | 27 | 43.0 | * | 5 |
| 26.4 | * | 6 | | | |

**\*AlPO$_4$-11 impurity peaks**
**sh = shoulder**

From the X-ray data, it is apparent that the product is a mixture of AlPO$_4$-41 and the prior-known AlPO$_4$-11, with AlPO$_4$-41 being the major component.

EXAMPLE 2

A reaction mixture was prepared by combining 23.0 grams of 85 wt.% orthophosphoric acid (H$_3$PO$_4$) and 77.3 grams of water, to which was added 14.4 grams of a pseudo-boehmite phase (70.9 wt.% Al$_2$O$_3$, 29.1 wt. % H$_2$O), and stirred until homogeneous. To this mixture was added 20.2 grams of di-n-propylamine and the mixture was stirred until homogeneous. To this mixture was added 1.2 grams of seed crystals (a mixture of AlPO$_4$-31 and a trace of AlPO$_4$-41), and the mixture was stirred. The composition of the final reaction mixture, excluding the seed crystals, in molar oxide ratios was:

2.0Pr$_2$NH : Al$_2$O$_3$ : P$_2$O$_5$ : 50 H$_2$O

A portion of the reaction mixture (107.1 grams) was sealed in a stainless steel pressure vessel lined with polytetrafluoroethylene and was heated in an oven at 200° C. at autogenous pressure for 18 hours. The solid reaction product was recovered by centrifuging and washing with water, and dried in air at ambient temperature. The product had an X-ray powder diffraction pattern characterized by the data in Table IV. This product was a mixture of two crystalline phases containing approximately equal amounts of AlPO$_4$-41 and AlPO$_4$-31.

## TABLE IV

| $2\theta$ | $100 \times (I/I_o)$ |
|---|---|
| 6.9 | 66 |
| 8.5 * | 70 |
| 9./5 | 38 |
| 13.85 | 44 |
| 18.35 | 25 |
| 20.0 * | 7 |
| 20.35* | 13 |
| 20.8 | 13 |
| 21.2 | 33 |
| 21.85* | 7 |
| 22.35 | 100 |
| 22.75* | 54 |
| 23.0 | 60 |
| 23.4 | 19 |
| 25.4 | 12 |
| 26.05 | 46 |
| 27.85 | 11 |
| 29.6 | 30 |
| 29.9 | 8 |
| 31.5 | 9 |
| 35.05 | 8 |
| 37.15 | 7 |
| 37.8 | 8 |

*$AlPO_4$-31 impurity peaks

Using the same reagents and procedures as in Example 2, supra, a series of five syntheses of $AlPO_4$-41 were carried out. In the first of the series, the seed crystals were from the product of Example 2. In the second of the series, the seed crystals were obtained from the product of the first of the series, and so on through the entire series. In each successive synthesis, the content of the desired $AlPO_4$-41 in the product increased so that in the fourth synthesis of the series the product was principally $AlPO_4$-41 containing only a trace of $AlPO_4$-31. The last synthesis of the series is the preparation described in Example 3, below.

EXAMPLE 3

(a) A reaction mixture was prepared by combining 26.0 grams of 85 wt.% orthophosphoric acid ($H_3PO_4$)

and 154.6 grams of water, to which was added 28.8 grams of a pseudo-boehmite phase (70.9 wt.% $Al_2O_3$, 29.1 wt.% $H_2O$), and stirred until homogeneous. To this mixture was added 40.4 grams of di-n-propylamine and the mixture was stirred until homogeneous. To this mixture was added 2.4 grams of seed crystals ($AlPO_4$-41 with a small amount of $AlPO_4$-31), and the mixture was stirred. The composition of the final reaction mixture, excluding the seed crystals, in molar oxide ratios was:

2.0 $Pr_2NH$ : $Al_2O_3$ : $P_2O_5$ : 50 $H_2O$

A portion of the reaction mixture (113.7grams) was sealed in a stainless steel pressure vessel lined with polytetrafluroethylene and was heated in an oven at 200°C. at autogenous pressure for 22 hours. The solid reaction product was recovered by centrifuging, washed with water and dried in air at ambient temperature.

A portion of the solid reaction product was analyzed and the following chemical analysis obtained:

## Weight Percent

| | |
|---|---|
| Carbon | 4.4 |
| Nitrogen | 0.84 |
| $Al_2O_3$ | 41.8 |
| $P_2O_5$ | 47.6 |
| LOI * | 10.8 |

*LOI = Loss on Ignition

The above chemical analysis corresponds to a product composition in molar oxide ratios of: 0.15 $Pr_2NH$ : $Al_2O_3$ : 0.82 $P_2O_5$ : 1.46 $H_2O$

Thermogravimetric analysis of the product shows a weight loss upon heating at 10°C./minute in air corresponding to loss of essentially all the organic and water contained therein at a temperature below 500°C.

The solid reaction product had an X-ray powder diffraction pattern characterized by the data in Table V.

## TABLE V

| $2\theta$ | $100 \times (I/I_o)$ |
|---|---|
| 6.85 | 49 |
| 9.7 | 38 |
| 13.8 | 40 |
| 18.3 | 25 |
| 20.8 | 25 |
| 21.15 | 54 |
| 22.25 | 100 |
| 23.0 | 60 |
| 23.35 | 26 |
| 25.35 | 19 |
| 26.0 | 47 |
| 27.85 | 10 |
| 28.15 | 5 |
| 28.30 | 5 |
| 29.55 | 32 |
| 29.85 | 8 |
| 31.45 | 8 |
| 35.0 | 6 |
| 36.65 | 5 |
| 37.1 | 7 |
| 37.75 | 11 |
| 47.8 | 6 |

The AlPO$_4$-41 product contained a minor amount of unreacted pseudo-boehmite but contained no other crystalline impurity. EDAX (energy dispersive analysis by X-ray) microprobe analysis, performed in conjunction with SEM (scanning electron microscopy), of particles having morphologies uncharacteristic of AlPO$_4$-41 confirmed the presence of unreacted pseudo-boehmite.

(b) A portion of the solid crystalline product obtained above was calcined by heating from 100°C. to 600°C. in air over 2 hours then at 600°C. for 2 hours. The calcined product had an X-ray powder diffraction pattern characterized by the data in Table C.

## TABLE C

| 2θ | 100 x (I/Io) |
|-----|-----|
| 6.8 | 13 |
| 9.5 | 35 |
| 10.5 | 48 |
| 13.65 | 40 |
| 15.0 | 16 |
| 18.85 | 19 |
| 20.55 | 27 |
| 21.15 | 23 |
| 21.7 | 100 |
| 22.75 | 7 |
| 23.25 | 36 |
| 23.75 | 23 |
| 24.15 | 12 |
| 24.4 | 7 |
| 25.1 | 25 |
| 25.7 | 31 |
| 27.3 | 12 |
| 28.9 | 12 |
| 30.2 | 14 |
| 30.95 | 29 |
| 32.85 | 7 |
| 36.25 | 9 |
| 37.7 | 9 |
| 38.2 | 5 |
| 44.15 | 6 |
| 49.3 | 6 |

(c) Adsorption capacities of AlPO$_4$-41 [prepared in part (b), supra] were measured using a standard McBain-Baker gravimetric adsorption apparatus. The following data were obtained on a sample activated at 350°C.:

|  | Diameter (A) | Pressure (Torr.) | Temp. (°C.) | Wt.% Adsorbed |
|---|---|---|---|---|
| Oxygen | 3.46 | 102 | -183 | 9.1 |
| n-Hexane | 4.3 | 45 | 23 | 6.0 |
| Cyclohexane | 6.0 | 60 | 22 | 9.0 |
| Neopentane | 6.2 | 302 | 22 | 3.3 |
| $H_2O$ | 2.65 | 4.6 | 22 | 12.0 |

From the above data, the pore size of the calcined product was determined to be greater than about 6.0 Angstroms as shown by the adsorption of cyclohexane (kinetic diameter of 6.0Å), and very close to about 6.2Å as shown by the limited adsorption of neopentane (kinetic diamter of 6.2Å).

EXAMPLE 4

(a) A reaction mixture was prepared by combining 23.0 grams of 85 wt.% orthophosphoric acid ($H_3PO_4$) and 77.3 grams of water, to which was added 7.4 grams of a pseudo-boehmite phase (69.0 wt.% $Al_2O_3$, 31.0 wt.% $H_2O$), and stirred until homogeneous. To this mixture was added 20.2 grams of di-n-propylamine, and the mixture was stirred until homogeneous. To this mixture was added 2.4 grams of $AlPO_4$-41 seed crystals and the mixture was stirred. The composition of the final reaction mixtures, excluding the seed crystals, in molar oxide ratios was:
4.0 $Pr_2NH$ : $Al_2O_3$ : 2.0 $P_2O_5$ : 76 $H_2O$

A portion of the reaction mixture (110.2 grams) was sealed in a stainless steel pressure vessel lined with polytetrafluoroethylene and was heated in an oven at 200°C. at autogenous pressure for 7 hours. The solid reaction product was recovered by centrifuging, washed with water and dried in air at 100°C.

A portion of the solid reaction product was analyzed and the following chemical analysis obtained:

### Weight Percent

| | |
|---|---|
| Carbon | 5.2 |
| Nitrogen | 0.83 |
| $Al_2O_3$ | 36.1 |
| $P_2O_5$ | 54.8 |
| LOI* | 9.5 |

*LOI = Loss on Ignition

The above chemical analysis corresponds to a product composition in molar oxide ratios of:
0.31 $Pr_2NH$ : $Al_2O_3$ : 1.09 $P_2O_5$ : 1.49 $H_2O$

The solid reaction product had an X-ray powder diffraction pattern characterized by the data in Table VI.

EP 0 254 075 B1

## TABLE VI

| 2θ | 100 x (I/Io) |
|---|---|
| 6.85 | 45 |
| 9.7 | 34 |
| 13.8 | 36 |
| 18.3 | 21 |
| 20.8 | 12 |
| 21.15 | 77 |
| 22.3 | 100 |
| 23.0 | 51 |
| 23.35 | 28 |
| 25.35 | 20 |
| 26.0 | 43 |
| 27.85 | 7 |
| 29.55 | 26 |
| 29.8 | 9 |
| 31.5 | 8 |
| 33.55 | 5 |
| 33.75 | 5 |
| 35.0 | 5 |
| 37.1 | 6 |
| 37.8 | 15 |
| 43.1 | 5 |

(b) A portion of the solid crystalline product obtained above was calcined in air by heating from 100°C. to 600°C. over 2 hours then at 600°C. for 4 hours. The calcined product had an X-ray powder diffraction pattern characterized by the data in Table D..

14

## TABLE D

| 2θ | 100 x (I/Io) |
|------|------|
| 6.8 | 12 |
| 9.5 | 23 |
| 10.5 | 30 |
| 13.65 | 29 |
| 15.0 | 11 |
| 18.85 | 11 |
| 20.55 | 19 |
| 21.15 | 14 |
| 21.7 | 100 |
| 22.75 | 6 |
| 23.25 | 24 |
| 23.7 | 14 |
| 24.15 | 8 |
| 25.1 | 13 |
| 25.7 | 20 |
| 27.35 | 7 |
| 28.9 | 9 |
| 30.25 | 9 |
| 30.9 | 19 |
| 36.25 | 6 |
| 37.75 | 7 |
| 44.15 | 6 |

(c) Adsorption capacities of AlPO$_4$-41 (prepared in part (b), supra) were measured using a standard McBain-Baker gravimetric adsorption apparatus. The following data were obtained on a sample activated at 350°C.:

| | Diameter (A) | Pressure (Torr.) | Temp. (°C.) | Wt.% Adsorbed |
|------|------|------|------|------|
| Oxygen | 3.46 | 100 | -183 | 9.6 |
| n-Hexane | 4.3 | 45 | 23 | 5.7 |
| Neopentane | 6.2 | 300 | 23 | 3.2 |

EXAMPLE 5

15

Using the same reagents and procedure as in Example 4, supra, a reaction mixture was prepared having the following composition:

4.0 $Pr_2NH : Al_2O_3 : 2.0 P_2O_5 : 100 H_2O$

and containing 0.06 grams of $AlPO_4$-41 seeds per gram of $Pr_2NH$. The product obtained by crystallization at 150°C. for 12 hours in a sealed reactor was determined to be $AlPO_4$-41 by X-ray analysis.

## EXAMPLE 6

(a) Using the same reagents and procedure as in Example 4, supra, a 1164 gram reaction mixture was prepared having the following composition:

2.0 $Pr_2NH : Al_2O_3 : 1.0 P_2O_5 : 50 H_2O$

and containing 0.055 grams of $AlPO_4$-41 seeds per gram of $Pr_2NH$. The product obtained by crystallization at 200°C. for 22 hours in a sealed reactor was determined to $AlPO_4$-41 by X-ray and chemical analysis. The chemical composition was:

0.004 $Pr_2NH : Al_2O_3 : 0.81 P_2O_5 : 1.51 H_2O$

(b) Adsorption capacities of the $AlPO_4$-41 product after calcination at 600°C. (activation at 350°C.) were found to be:

| | Diameter (A) | Pressure (Torr.) | Temp. (°C.) | Wt.% Adsorbed |
|---|---|---|---|---|
| Oxygen | 3.46 | 100 | -183 | 9.1 |
| n-Hexane | 4.3 | 45 | 22 | 6.3 |
| Cyclohexane | 6.0 | 50 | 22 | 8.7 |
| Neopentane | 6.2 | 299 | 22 | 3.9 |
| $H_2O$ | 2.65 | 4.6 | 21 | 12.1 |

## Claims

1. Microporous crystalline aluminophosphate having an essential framework structure whose chemical composition expressed in terms of mole ratios of oxides is

$Al_2O_3 : 1.0 \pm 0.2 P_2O_5$

and having a characterisitic X-ray powder diffraction pattern containing at least the following lines:

| $2\theta$ | Relative Intensity |
|---|---|
| 6.8 - 6.95 | M |
| 9.7 - 9.8 | W-M |
| 13.75-13.85 | M |
| 21.1 -21.2 | M-S |
| 22.25-22.35 | VS |
| 22.95-23.05 | M |
| 25.95-26.05 | M |
| 29.50-29.60 | W-M |

2. Microporous crystalline aluminophosphate which results from the calcination of the composition of claim 1 at a temperature of at least 300° C.

3. Microporous crystalline aluminophosphate having an essential framework structure whose chemical composition expressed in terms of mole ratios of oxides is

$Al_2O_3 : 1.0 \pm 0.2 \ P_2O_5$

and having a characteristic X-ray powder diffraction pattern containing at least the following lines:

| $2\theta$ | Relative Intensity |
|---|---|
| 9.40- 9.55 | W-M |
| 10.45-10.5 | M |
| 13.6 -13.7 | M |
| 21.6 -21.7 | VS |
| 23.15-23.3 | W-M |
| 25.6 -25.7 | W-M |

4. Process for preparing a microporous crystalline aluminophosphate of claim 1 which comprises forming a reaction mixture having a composition expressed in terms of mole ratios of oxides of

$Al_2O_3$ 0.5 to 3 $P_2O_5$ : 10-200 $H_2O$

and containing from 1.0 to 6 moles of di-n-propylamine per mole of $Al_2O_3$ and seed crystals of said crystalline aluminophosphate, and heating the reaction mixture thus formed at a temperature of at least 100° C under autogenous pressure until newly formed crystals of said aluminophosphate exist therein.

5. Process according to claim 4 wherein the reaction mixture composition expressed in terms of mole ratios of oxides is

$Al_2O_3$ 1.5 + 0.5 $P_2O_5$ : 40-100 $H_2O$

and contains from 2.0 to 4.0 moles of di-n-propylamine per mole of $Al_2O_3$.

**Revendications**

1. Aluminophosphate cristallin microporeux ayant une structure d'ossature essentielle dont la composition chimique, exprimée en rapports molaires d'oxydes, est

$Al_2O_3 : 1,0 \pm 0,2 \, P_2O_5$

et présentant un diagramme caractéristique de diffraction des rayons X par la méthode des poudres qui comporte au moins les raies suivantes :

| $2\theta$ | | | Intensité relative |
|---|---|---|---|
| 6,8 | – | 6,95 | M |
| 9,7 | – | 9,8 | F–M |
| 13,75 | – | 13,85 | M |
| 21,1 | – | 21,2 | M–I |
| 22,25 | – | 22,35 | TI |
| 22,95 | – | 23,05 | M |
| 22,95 | – | 26,05 | M |
| 29,50 | – | 29,60 | F–M |

2. Aluminophosphate cristallin microporeux qui résulte de la calcination de la composition de la revendication 1 à une température d'au moins 300°C.

3. Aluminophosphate cristallin microporeux ayant une structure d'ossature essentielle dont la composition chimique, exprimée en rapports molaires d'oxydes, est

$Al_2O_3 : 1,0 \pm 0,2 \, P_2O_5$

et présentant un diagramme caractéristique de diffraction des rayons X par la méthode des poudres qui comporte au moins les raies suivantes :

| $2\theta$ | | | Intensité relative |
|---|---|---|---|
| 9,40 | – | 9,55 | F–M |
| 10,45 | – | 10,5 | M |
| 13,6 | – | 13,7 | M |
| 21,6 | – | 21,7 | TI |
| 23,15 | – | 23,3 | F–M |
| 25,6 | – | 25,7 | F–M |

4. Procédé pour préparer un aluminophosphate cristallin microporeux de la revendication 1, qui consiste à former un mélange réactionnel ayant une composition, exprimée en rapports molaires d'oxydes, qui est

$Al_2O_3 : 0,5 \text{ à } 3 \, P_2O_5 : 10 \text{ à } 200 \, H_2O$

et contenant 1,0 à 6 moles de di-n-propylamine par mole de $Al_2O_3$ et des cristaux germes dudit aluminophosphate cristallin, et à chauffer le mélange réactionnel ainsi formé à une température d'au moins 100°C sous pression autogène jusqu'à ce qu'il s'y trouve des cristaux nouvellement formés dudit aluminophosphate.

5. Procédé selon la revendication 4, dans lequel la composition du mélange réactionnel, exprimée en rapports molaires d'oxydes, est

$Al_2O_3 : 1,5 \pm 0,5 \, P_2O_5 : 40 \text{ à } 100 \, H_2O$

et contient 2,0 à 4,0 moles de di-n-propylamine par mole de $Al_2O_3$.

**Ansprüche**

1. Mikroporöses kristallines Aluminophosphat mit einer grundlegenden Gerüststruktur, deren chemische Zusammensetzung ausgedrückt in Molverhältnissen der Oxide

   $Al_2O_3 : 1,0 \pm 0,2\ P_2O_5$

   ist und mit einem charakteristischen Röntgenbeugungsdiagramm nach der Kristallpulvermethode, das wenigstens die folgenden Linien enthält:

   | $2\Theta$ | relative Intensität |
   |---|---|
   | 6,8 – 6,95 | m |
   | 9,7 – 9,8 | schw-m |
   | 13,75 – 13,85 | m |
   | 21,1 – 21,2 | m-st |
   | 22,25 – 22,35 | sst |
   | 22,95 – 23,05 | m |
   | 25,95 – 26,05 | m |
   | 29,50 – 29,60 | schw-m |

2. Mikroporöses kristallines Aluminophosphat, das durch Calcinierung der Zusammensetzung nach Anspruch 1 bei einer Temperatur von wenigstens 300°C erhältlich ist.

3. Mikroporöses kristallines Aluminophosphat mit einer grundlegenden Gerüststruktur, deren chemische Zusammensetzung ausgedrückt in Molverhälnissen der Oxide

   $Al_2O_3 : 1,0 \pm 0,2\ P_2O_5$

   ist und mit einem charakteristischen Röntgenbeugungsdiagramm nach der Kristallpulvermethode, das wenigstens die folgenden Linien enthält:

   | $2\Theta$ | relative Intensität |
   |---|---|
   | 9,40 – 9,55 | schw-m |
   | 10,45 – 10,5 | m |
   | 13,6 – 13,7 | m |
   | 21,6 – 21,7 | sst |
   | 23,15 – 23,3 | schw-m |
   | 25,6 – 25,7 | schw-m |

4. Verfahren zur Herstellung eines mikroporösen kristallinen Aluminophosphats nach Anspruch 1, umfassend die Herstellung eines Reaktionsgemischs mit einer Zusammensetzung ausgedrückt in Molverhältnissen der Oxide von

   $Al_2O_3 : 0,5$ bis $3\ P_2O_5 : 10$-$200\ H_2O$

   und welches 1,0 bis 6 mol Di-n-propylamin pro mol $Al_2O_3$ und Impfkristalle dieses kristallinen Aluminophosphats enthält und das Erhitzen dieses so hergestellten Reaktionsgemischs auf eine Temperatur von wenigstens 100°C unter Reaktionsdruck, bis neu gebildete Kristalle dieses Aluminophosphats darin entstanden sind.

5. Verfahren nach Anspruch 4, worin die Zusammensetzung des Reaktionsgemischs ausgedrückt in Molverhältnissen der Oxide

$Al_2O_3 : 1,5 + 0,5 P_2O_5 : 40\text{-}100 H_2O$
ist und das $\overline{2,0}$ bis 4,0 mol Di-n-propylamin pro mol $Al_2O_3$ enthält.